# EUROPEAN PATENT APPLICATION

(11) **EP 4 683 188 A1**
(43) Date of publication of application: **21.01.2026**
(21) Application number: 25190161.7
(22) Date of filing: 17.07.2025
(51) Int. Cl.: H02K 9/19, H02K 5/20

(54) **ELECTRIC MOTOR FOR A MOTOR VEHICLE**

(30) Priority: 19.07.2024 IT 202400016768
(71) Applicant: FERRARI S.p.A., 41100 Modena (IT)
(72) Inventor: CRIVELLARO, Denis, 41100 MODENA (IT); DELLA FORNACE, Enrico, 41100 MODENA (IT); FAVERZANI, Paolo, 41100 MODENA (IT); FERRARA, Davide, 41100 MODENA (IT)
(74) Representative: Studio Torta S.p.A.

(57) **Abstract**

An electric motor (2) for a motor vehicle (1) is described, comprising a stator (3) which is fixed relative to an axis (A); a rotor (4) which can rotate around an axis (A) relative to the stator (3); a casing (30) housing the rotor (4) and the stator (3); a cooling circuit (50) through which a heat transfer fluid can flow and which is thermally coupled at least to the stator (3) to remove heat from it; the stator (3) is forced, through interference, onto the casing (30); the cooling circuit (50) comprising, in turn, an inlet mouth (51) defined by the casing (30) and crossed by the heat transfer fluid having a first temperature; and an outlet mouth (52) defined by the casing (30) and crossed by the heat transfer fluid having a second temperature higher than the first temperature; the cooling circuit (30) comprises, proceeding from the inlet mouth (51) towards the outlet mouth (52), a first branch (55) going through the stator (3); a second branch (56) defined by at least one groove (65) delimited, radially to the axis (A), between the stator (3) and the casing (30).

## Description

### CROSS-REFERENCE TO RELATED APPLICATIONS

This patent application claims priority from Italian patent application no. 102024000016768, filed on July 19, 2024, the entire disclosure of which is incorporated herein by reference.

### TECHNICAL FIELD

The present invention relates to an electric motor for a motor vehicle.

### BACKGROUND

Vehicles with electric or hybrid propulsion are known, which comprise a permanent magnet electric motor.

To be extremely brief, the permanent magnet electric motor comprises, in turn:
- a casing;
- a stator provided with electrical windings that can be powered electrically to form a rotating magnetic field; and
- a rotor mounted rotatably relative to the stator around its own axis, and provided with permanent magnets and subject to a drive torque around said axis following powering of the electric windings with alternating current.

The stator and the rotor are housed inside the casing.

In a known manner, the stator and the rotor are coaxial to one another. The stator coaxially houses the rotor and further comprises a plurality of radial teeth mounted, through interference, against a radially inner surface of the casing.

There is a need in the sector to cool the electric motor, reducing the overall weights and dimensions thereof.

There is also a need in the sector to increase the torque and power density - i.e. the torque/power and weight ratio - of the electric motor.

There is also a need in the sector to reduce, as far as possible, the number of components of the electric motor, so as to further limit the overall weights and dimensions thereof.

There is also a need in the sector to cool the electric motor, minimising, as far as possible, the alterations to be made to the rotor, to the casing and to the stator.

Lastly, there is a need in the sector to cool the electric motor, facilitating, as far as possible, the methods of installation on a relative axle of the motor vehicle.

### SUMMARY

The object of the present invention is to obtain an electric motor for a motor vehicle which allows at least one of the aforementioned needs to be satisfied.

The aforesaid object is achieved by the present invention, as it relates to an electric motor according to what is defined by claim 1.

### BRIEF DESCRIPTION OF THE DRAWINGS

For a better understanding of the present invention, a preferred embodiment is described below, by way of nonlimiting example and with reference to the appended drawings, in which:
- Figure 1 is a transverse cross-section of an electric motor manufactured according to the dictates of the present invention;

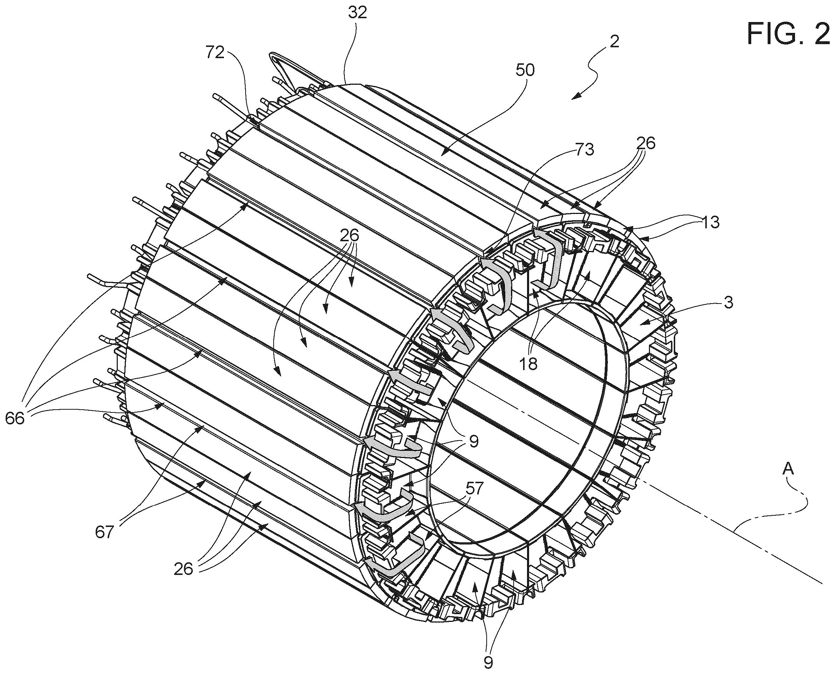

- Figure 2 is a perspective view of the electric motor of Figure 1, with parts removed for clarity;

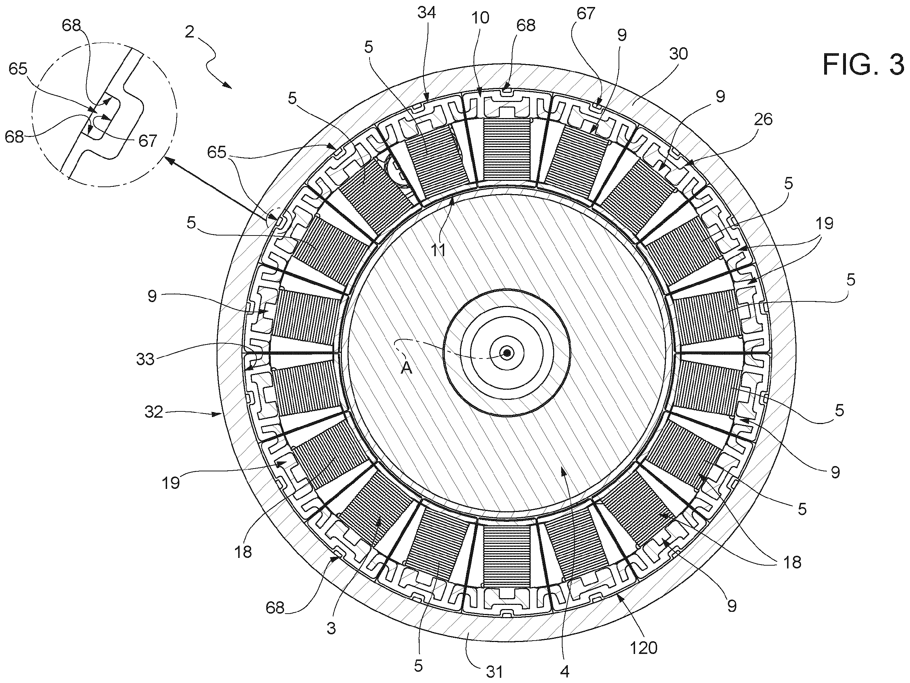

- Figure 3 is a front view of the electric motor of Figures 1 and 2; and
- Figure 4 is a perspective view on a particularly enlarged scale of several details of the electric motor of Figure 2.

### DESCRIPTION OF EMBODIMENTS

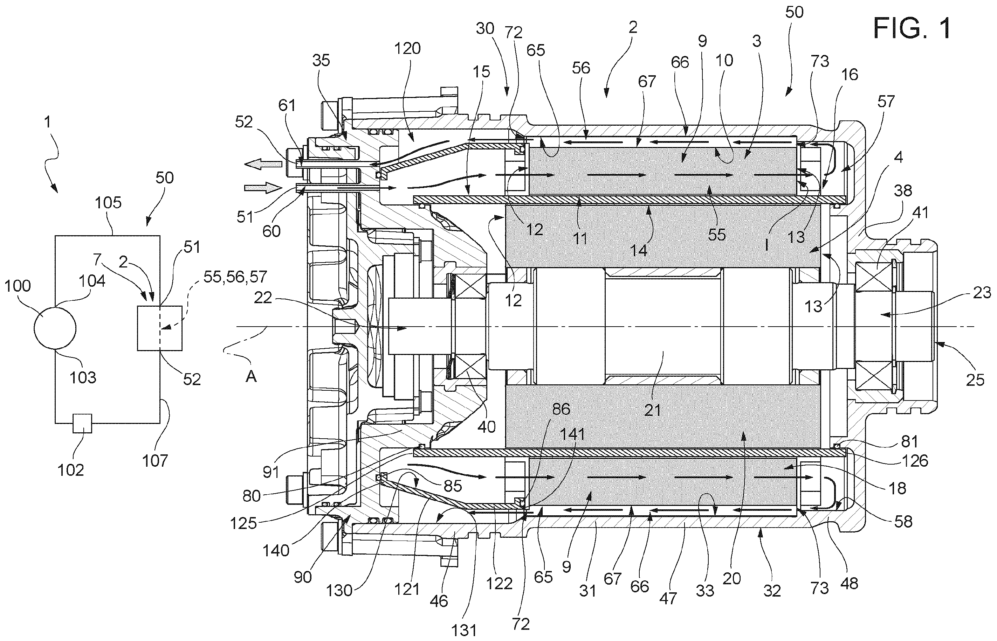

With reference to Figure 1, the number 1 indicates a motor vehicle 1 with electric or hybrid propulsion.

The illustration of the motor vehicle 1 is limited solely to an axle 7 comprising an electric motor 2, a permanent magnetic electric motor in the case illustrated.

The electric motor 2 could be operatively connected, preferably by means of relative transmission units, to a pair of wheels (not illustrated in the appended drawings), preferably front or rear wheels of the motor vehicle.

Alternatively, the axle 7 could comprise two electric motors 2, each of which is operatively connected, preferably by means of a transmission unit, to a relative front or rear wheel (not illustrated) .

In greater detail, the electric motor 2 essentially comprises:
- a stator 3 which is fixed relative to an axis A; and
- a rotor 4 which can rotate around the axis A relative to the stator 3.

In a known manner, the stator 3 is provided with electrical windings 5 which can be electrically powered with alternating current to form a rotating magnetic field.

The rotor 4 is provided with permanent magnets (not illustrated in Figure 1) and is subject to a drive torque around the axis A, following powering of the electrical windings with alternating current.

In the case illustrated, the stator 3 is tubular with axis A and the rotor 4 is housed coaxially inside the stator 3.

The stator 3 comprises, in turn:
- a pair of rings 10, 11 respectively radially outer and radially inner relative to the axis A; and
- a pair of head surfaces 12, 13 shaped as circular crowns and defining respective axial ends opposite to one another of the stator 3 itself

The ring 10 is axially delimited between the head surfaces 12, 13.

The ring 11 comprises, in turn:
- a portion 14 delimited between the surfaces 12, 13; and
- a pair of axial end portions 15, 16 opposite to one another, between which the portion 14 extends and projecting respectively in an axial direction from the corresponding head surfaces 12, 13.

The rotor 4 is housed coaxially inside the stator 3.

The rotor 4 further comprises, in turn:
- a tubular main body 20; and
- a shaft 21 housed inside the main body 20 and provided with a pair of appendages 22, 23 arranged defining respective axial ends of the shaft 21 itself.

The appendage 23 defines a power take-off 25 for a transmission unit (not illustrated) and operatively connected to one or more wheels of the motor vehicle 1.

The appendages 22, 23 project axially from the main body 20.

The electric motor 2 further comprises:
- a casing 30 of axis A;
- a cover 35 connected to the casing 30 and also fixed relative to the axis A;
- a rolling bearing 40 radially interposed between the appendage 22 of the shaft 21 and the cover 35; and
- a rolling bearing 41 interposed between the appendage 23 of the shaft 21 and the casing 30.

The casing 30 essentially comprises:
- a tubular wall 31 with mainly axial extension; and
- an axial end flange 38 crossed by the appendage 22.

The bearing 41 is, in particular, radially interposed between appendage 22 and flange 38.

The cover 35 is arranged closing the casing 30 in an axially opposite position to the flange 38, and is crossed by the appendage 22 of the shaft 21.

The casing 30 and the cover 35 coaxially house the rotor 4.

The stator 3 is mounted, through interference, inside the casing 30, so as to discharge the reaction torque onto the casing 30 itself.

Advantageously, the electric motor 2 comprises a cooling circuit 50 through which a heat transfer fluid can flow and thermally coupled to the stator 3 to remove heat from it;
the stator 3 is forced, through interference, onto the casing 30;
the cooling circuit 50 comprising, in turn:
   - an inlet mouth 51, which is defined by the casing 30 and is crossed by the heat transfer fluid having, in use, a first temperature; and
   - an outlet mouth 52, which is defined by the casing 30 and is crossed by said heat transfer fluid having, in use, a second temperature higher than the first temperature;
the cooling circuit 50 further comprises, proceeding from said inlet mouth 51 towards the outlet mouth 52:
   - a branch 55 going through the stator 3; and
   - a branch 56 defined by a plurality of grooves 65 delimited, radially to the axis A, between the stator 3 and said casing 30.

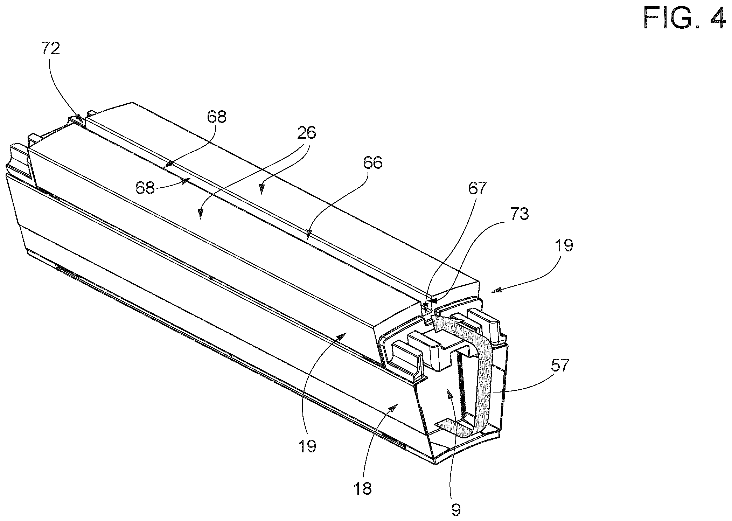

In greater detail and with particular reference to Figure 4, the stator 3 comprises a plurality of teeth 9 angularly equally spaced around the axis A and elongated parallel to the axis A.

More specifically, the teeth 9 are forced onto the plate 31 of the casing 30, so as to prevent rotation of the stator 3 around the axis A.

The teeth 9 extend radially interposed between the rings 10 and 11.

The teeth 9 have a substantially T-shaped cross-section on a plane orthogonal to the axis A and comprise, each:
- a respective radially inner portion 18 and on which the relative electrical winding 5 is fixed; and
- a respective pair of radially outer appendages 19 that are forced onto the casing 30.

The appendages 19 project circumferentially to the axis A from the portion 18 of the respective tooth 9.

The appendages 19 of each tooth 9 further have respective radially outer surfaces 26, opposite to the respective portion 18 and forced, through interference, onto the plate 31 of the casing 30.

The surfaces 26 of each tooth 9 are shaped as respective cylindrical surface portions of the axis A.

The appendages 19 of each tooth 9 are facing one another circumferentially and are distanced from one another by a respective recess 66 elongated parallel to the axis A.

Each recess 66 is delimited, in particular, by:
- a bottom surface 67 that is radially inner relative to the surfaces 26 and radially distanced from the casing 30; and
- a pair of surfaces 68 lying on respective radial planes to the axis A and facing one another at a distance and extending radially between respective surfaces 26 and the surface 67.

The recesses 66 are adapted to allow angular timing of the rotor 4 relative to the stator 3 around the axis A.

The recesses 66 and the wall 31 of the casing 30 define respective grooves 65 (Figure 1) elongated parallel to the axis A and angularly equally spaced around the axis A.

Each recess 66 further comprises an axial end 72 arranged on the side of the cover 35 and an axial end 73 opposite to the axial end 72 arranged on the side of the flange 38.

Coupling, through interference, between the surfaces 26 of the teeth 9 and the wall 31 of the casing 30 therefore ensures not only locking of the stator 3 around the axis A, but also fluid tightness of the branch 55 of the circuit 30.

The cooling circuit 50 further comprises:
- an axial conduit 60 crossing the cover 35 and delimited by the inlet mouth 51 outside the casing 30; and
- an axial conduit 61 crossing the cover 35 and delimited by the outlet mouth 52 outside the casing 30.

The conduit 60 is fluidly interposed between the inlet mouth 51 and the branch 55, proceeding according to the direction of advancement of the heat transfer fluid from the inlet mouth 51 to the outlet mouth 52.

The conduit 61 is fluidly interposed between the branch 56 and the outlet mouth 52, proceeding according to the direction of advancement of the heat transfer fluid from the inlet mouth 51 to the outlet mouth 52.

The conduits 60, 61 are arranged eccentrically relative to the axis A.

In particular, the conduit 61 is radially outer to the conduit 60 and arranged in a radially intermediate position between the conduit 60 and the plate 31 of the casing 30.

The cooling circuit 50 further comprises a branch 57 interposed fluidly between the branches 55, 56 and along which the heat transfer fluid substantially describes a U-shaped path.

In greater detail, the wall 31 of the casing 30 comprises, in particular:
- a radially outer surface 32; and
- a radially inner surface 33, opposite to the surface 32 and radially distanced from the ring 11.

The surface 33 comprises, in turn:
- a pair of axial end portions 46, 48 radially distanced from respective portions 14, 15 of the ring 11, facing respective portions 14, 15 without interposition of external elements and axially staggered by the teeth 9 of the stator 3; and
- a main portion 47 axially interposed between the end portions 46, 48, radially facing the teeth 9, and onto which the surfaces 26 of the portions 18 of the teeth 9 are forced, through interference.

The casing 30 further comprises an annular partition 120 axially interposed between the cover 35 and the ends 72 of the recesses 66 arranged on the side of the cover 35.

The partition 120 comprises, in particular, proceeding from the cover 35 towards the head surface 12 of the stator 3:
- a conical segment 121 tapered proceeding, parallel to the axis A, towards the cover 35; and
- a cylindrical segment 122 arranged radially at the ends 72 of the recesses 66.

The electric motor 2 further comprises (Figure 1):
- an annular chamber 130 delimited in radially inner position by the cover 35 and by the portion 15 of the ring 10 and in radially outer position by the partition 120; and
- an annular chamber 131 delimited in radially inner position by the partition 120 and in radially outer position by the end portion 46 of the surface 33, and fluidly connected with the grooves 65.

The branch 55 is defined, proceeding from the conduit 60 towards the branch 57, by the chamber 130 and by the portions 18 of the teeth 9.

The branch 56 comprises, in turn, an inlet section I defined by the surface 13 of the stator 3.

The branch 56 is defined, proceeding from the inlet section I towards the conduit 61 in accordance with the direction of advancement of the heat transfer fluid, the grooves 65 and the chamber 131:
- by the grooves 65; and
- by the chamber 131.

The chamber 131 is fluidly connected with the conduit 61.

The chamber 130 is fluidly connected with the conduit 60.

The electric motor 2 further comprises a chamber 58 defining the branch 57 of the cooling circuit 50.

The chamber 58 is axially delimited between the flange 38 and the head surface 12 of the stator 3, and radially between an end portion 16 of the ring 11 in inner position and the axial end portion 48 of the plate 31 in outer position.

Preferably, the heat transfer fluid is dielectric oil.

The electric motor 2 further comprises:
- a gasket 80 interposed axially between the cover 35 and an axial end 125 of the ring 11 arranged on the side of the cover 35 itself; and
- a gasket 81 interposed axially between an end 126 of the ring 11 axially opposite to the end 125 and the flange 38.

The electric motor 2 further comprises:
- a gasket 85 interposed between an axial end 140 of the partition 120 arranged on the side of the cover 35 and the cover 35 itself; and
- a gasket 86 interposed between an axial end 141 of the partition 120 opposite to the end 140 and the head surface 12.

To be extremely brief, the cover 35 comprises, in turn:
- a main body 90 arranged so as to axially close the casing 30, fixed to the plate 31 of the casing 30 itself, and crossed axially by the conduit 61; and
- an appendage 91 with a smaller diameter than the main body 90, projecting cantilevered from the main body 90 inside the plate 31 and the ring 11, and radially distanced from the ring 11 itself.

The cooling circuit 50 comprises, in turn, illustrated solely schematically in Figure 1:
- a pump 100; and
- a radiator 102.

The pump 100 comprises a suction port 103 and a delivery port 104 and can be operated to produce the head needed to cause the heat transfer fluid to advance along the cooling circuit 50.

The cooling circuit 50 comprises, in turn, proceeding from the delivery port 104 to the suction port 103 according to the direction of advancement of the heat transfer fluid:
- a branch 105 on the outside of the electric motor 2 and along which the heat transfer fluid flows at a first temperature value;
- the branches 55, 57, 56 obtained inside the electric motor 2 and along which the heat transfer fluid removes heat from the stator 3, up until a second temperature value higher than the first temperature value is reached; and
- a branch 107 on the outside of the electric motor 2.

The radiator 102 is interposed along the branch 107 and returns the temperature of the heat transfer fluid from the second value to the first value by means of heat exchange with a cold source.

The pump 100 and the radiator 102 are carried by the motor vehicle 1 on the outside of the electric motor 2.

In use, operation of the electric motor 2 causes the production of heat at the rotor 4 and the stator 3.

Rotation of the rotor 4 around the axis A makes a specific torque and power value available to the power take-off 25.

The heat transfer fluid flows inside the cooling circuit 50, removing heat from the stator 3.

In greater detail, the pump 100 causes advancement of the heat transfer fluid inside the cooling circuit 50 according to a direction oriented from the suction port 103 to the delivery port 104.

The heat transfer fluid flows along the branch 105 on the outside of the electric motor 2 at the first temperature value, reaches the inlet mouth 51, flows along the branches 55, 57, 56 inside the electric motor 2 and removes heat from the stator 3 up until the second temperature value higher than the first temperature value is reached, exits from the electric motor 2 through the outlet mouth 52, and returns to the pump 100 by means of the branch 107 on the outside of the electric motor 2.

In greater detail, the heat transfer fluid flows axially inside the conduit 60 and the chamber 130 and laps the portions 18 of the teeth 9 along the branch 55 of the cooling circuit 50. The heat transfer fluid, in particular, when it laps the portions 18 of the teeth 9, progressively increases its own temperature and cools the teeth 9 themselves.

Subsequently, the heat transfer fluid flows along a U-shaped path inside the chamber 58 along the branch 57, and inside the grooves 65 and the chamber 131 along the branch 56 of the cooling circuit 50.

In particular, the heat transfer fluid, when it laps the appendages 19 of the teeth 9, further increases its own temperature and cools the appendages 19 themselves.

Subsequently, the heat transfer fluid crosses the conduit 61 and exits along the outlet mouth 52 from the electric motor 2 at the second temperature value.

The heat transfer fluid then crosses the radiator 102 and cools until it has returned to the first temperature value.

The advantages which may be obtained are evident from examination of the electric motor manufactured according to the present invention.

In particular, the branch 55 of the cooling circuit 50 extends through the stator 3 and the branch 56, and is defined by the grooves 65 delimited radially at the axis A between the teeth 19 of the stator 3 and the flange 31 of the casing 30.

It is thus possible to use the recesses 66 of the teeth 9 not only to allow angular timing between rotor 3 and stator 4, but also to delimit the grooves 65 defining the branch 56 of the cooling circuit 50.

It is also possible to use the appendages 19 of the teeth not only to mount, through interference, the stator 3 on the casing 30 and prevent its rotation around the axis A, but also to obtain the fluid tightness of the branch 56 of the cooling circuit 50.

In this manner, there is a reduced need for additional parts, such as further gaskets, to guarantee the fluid tightness of the branch 57 of the circuit 30, thus reducing the overall weights and dimensions of the electric motor 2.

This leads to a corresponding increase in the torque and power density of the electric motor, and further reduces the overall weights and dimensions thereof.

The inlet and outlet mouths 51, 52 are axially opposite to the power take-off 25.

In this manner, installation of the electric motor 2 on the axle 7 is facilitated.

The partition 120 allows fluid-tight separation of the branches 55, 56 of the cooling circuit 30.

Thanks to the fact that the heat transfer fluid is dielectric oil, no risks of short circuits with the electrical components of the stator 3 are created.

In conclusion, it is clear that changes and variants can be made to the electric motor 2 manufactured according to the present invention without thus deviating from the scope of protection as defined by the claims.

In particular, the branch 56 could be delimited between further components of the stator 3 and further surfaces of the casing 30.

## Claims

1. An electric motor (2) for a motor vehicle (1), comprising:
- a stator (3), which is fixed relative to an axis (A);
- a rotor (4), which can rotate around said axis (A) relative to said stator (3);
- a casing (30) housing said rotor (4) and stator (3); **characterized in that** it comprises a cooling circuit (50), through which a heat transfer fluid can flow and which is thermally coupled at least to said stator (3) to remove heat from it;
said stator (3) being forced, through interference, onto said casing (30);
said cooling circuit (50) comprising, in turn:
- an inlet mouth (51), which is defined by said casing (30) and is crossed by said heat transfer fluid having, in use, a first temperature; and
- an outlet mouth (52), which is defined by said casing (30) and is crossed by said heat transfer fluid having, in use, a second temperature higher than said first temperature;
said cooling circuit (50) further comprising, proceeding from said inlet mouth (51) towards said outlet mouth (52):
- a first branch (55) going through said stator (3);
- a second branch (56) defined by at least one groove (65) delimited, radially to said axis (A), between said stator (3) and said casing (30).

2. The electric motor according to claim 1, **characterized in that** said stator (3) comprises, in turn:
- a first radially inner end ring (11) delimiting said first branch (55) in a radially inner position;
- a partition (120), which is connected to first bottom surfaces (67) of respective said grooves (65) radially opposite said casing (30) and is fixed to said casing (30); said first branch (55) being at least partly delimited by said first ring (11) in a radially inner position and by said partition (120) in a radially outer position;
said second branch (56) being delimited by said partition (120) in a radially inner position and by said casing (30) in a radially outer position.

3. The electric motor according to claim 2, **characterized in that** said partition (120) comprises, in turn, axially proceeding from said first bottom surfaces (67) to said inlet and outlet mouths:
- a first cylindrical segment (122) connected to said teeth (9); and
- a second conical segment (121) tapered from said first segment (122) to said inlet and outlet mouths (51, 52).

4. The electric motor according to claim 3, **characterized in that** it comprises:
- a cover (35) arranged so as to close said casing (30);
- a first gasket (80) interposed between a first axial end (140) of said partition (120) and said cover (35); and
- a second gasket (81) interposed between a second axial end (141) of the partition (120) opposite said first end (140) and said stator (3).

5. The electric motor according to any one of the preceding claims, **characterized in that** it comprises an annular chamber (58) axially delimited between said casing (30) and a second axial end surface (13) of said stator (3) opposite said inlet and outlet mouths (51, 52) and radially delimited between said casing (30) and said first ring (11);
said cooling circuit (50) comprising a third branch (57) fluidly interposed between said first and second branch (55, 56) and defined by said chamber (58).

6. The electric motor according to any one of the preceding claims, **characterized in that** said inlet mouth (51) and/or said outlet mouth (52) are arranged axially.

7. The electric motor according to any one of the preceding claims, **characterized in that** said first and second branch (55, 56) are coaxial to one another, and **in that** said first branch (55) is arranged radially on the outside of said second branch (56).

8. The electric motor according to any one of the preceding claims, **characterized in that** said stator (3) comprises, in turn, a plurality of teeth (9) elongated along said axis (A) and spaced apart around said axis (A);
each tooth (9) being forced, through interference, onto said casing (30) and comprising, in turn, a relative recess (66) elongated along said axis (A) and radially spaced from said casing (30); each said recess (66) defining, with said casing (30), a relative groove (65) elongated parallel to said axis (A) .

9. The electric motor according to claim 8, **characterized in that** each tooth (9) comprises, in turn:
- a radially inner root portion (18), which is fixed to said first ring (11) and on which a plurality of electrical windings (5) are wound; and
- a radially outer end portion (19), having a larger dimension than said root portion (18) in a circumferential direction relative to said axis (A);
said first branch (55) extending through said root portions (18);
said end portion (19) of each tooth (9) comprising, in turn, a respective pair of radially outer end faces (26), which are forced onto said casing (30), circumferentially face one another and are separated from one another by said groove (65) .

10. The electric motor according to any one of the preceding claims, **characterized in that** said casing (30) comprises, in turn:
- a flange (38) defining a first axial end of the electric motor (2); and
- said cover (35), which is fixed to said casing (30) on a side axially opposite said flange (38) and defines a second axial end opposite said first end of said electric motor (2); said rotor (4) comprising a power take-off (25) coaxial to the axis (A) and going through said flange (38);
said outlet mouth (52) and said inlet mouth (51) going through said cover (35) and being axially opposite said flange (38); and/or **characterized in that** said cooling fluid is oil.

11. A motor vehicle comprising:
- an electric motor (2) according to any one of the preceding claims;
- a pump (100) comprising, in turn, a delivery segment (104) fluidly connected to said first branch (55) and a suction segment (103) fluidly connected to said second branch (56);
- a heat exchanger (102) fluidly interposed between said second branch (56) and said suction segment (103);
said heat exchanger (102) receiving, in use, said heat transfer fluid at said second temperature and delivering, in use, said heat transfer fluid at said first temperature;
said pump (100) and said heat exchanger (102) being arranged on the outside of said electric motor (2).
